# EUROPEAN PATENT APPLICATION

(11) **EP 4 387 131 A1**
(43) Date of publication of application: **19.06.2024**
(21) Application number: 22213783.8
(22) Date of filing: 15.12.2022
(51) Int. Cl.: H04L 1/00, G01S 13/02, G01S 13/76

(54) **METHOD OF OPERATING A DATA FRAME EXCHANGING COMMUNICATION DEVICE**

(71) Applicant: NXP B.V., 5656 AG Eindhoven (NL)
(72) Inventor: Tertinek, Stefan, 5656 AG Eindhoven (NL); Corbalán Pelegrín, Pablo, 5656 AG Eindhoven (NL)
(74) Representative: Krott, Michel

(57) **Abstract**

Method of operating a data frame exchanging communication device (100), comprising the steps:
- checking an on-air communication between an initiator (I) and at least one responder (R), wherein either the initiator (I) or the at least one responder (R) is part of the data frame exchanging communication device (100), for interference of a data frame exchanging interferer device (20) on said on-air communication; and
- based on determined interference, adapting a transmission scheme of the data frame exchanging communication device (100) in order to minimize said interference.

## Description

### TECHNICAL FIELD

The present disclosure relates to a method of operating a data frame exchanging communication device. Furthermore, the present disclosure relates to a data frame exchanging communication device. Furthermore, the present disclosure relates to a computer implemented method for carrying out the proposed method.

### BACKGROUND

Recently, IEEE has specified the 802.11ax standard (WiFi 6E), which allows a WiFi device to operate in the same 6-7 GHz frequency range as an IEEE 802.15.4 ultra-wideband (UWB) device. With power levels up to 20 dBm and a channel bandwidth of up to 160 MHz, a WiFi 6E signal represents an in-band source of interference to a UWB communication link, impacting UWB performance. The upcoming 802.11be standard (WiFi 7) will support up to 320 MHz channel bandwidths, making matters worse.

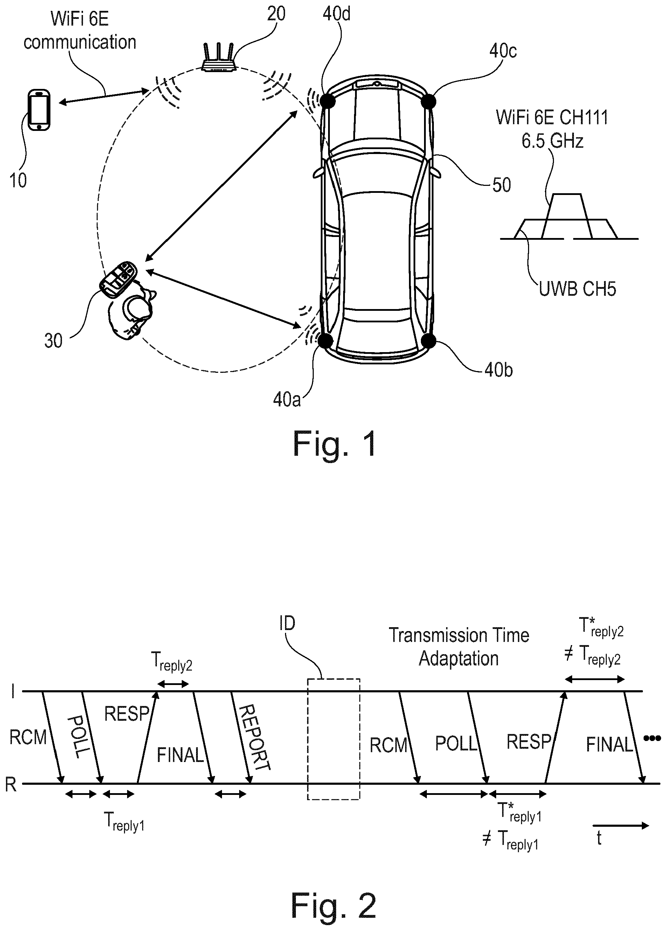

A practical example is the vehicle hands-free access scenario shown in Fig. 1, where a first communication device 10 (e.g., smartphone, tablet, etc.) is connected to a data frame exchanging interferer device 20 formed as a WiFi 6E station via Channel 111 (160 MHz), while a second communication device 30 (e.g., smart key fob) is simultaneously performing UWB ranging with multiple vehicle anchors 40a...40d via UWB Channel 5 (500 MHz). In the present scenario, the vehicle 50 can be parked in a garage of a house and the WiFi 6E station can be a router located in a near-by room performing a streaming service (e.g., movie streaming at high data rate 100 MB/s and high bandwidth 160 MHz). Fig. 1 depicts the overlapping frequency ranges of UWB Channel 5 with WiFi 6E Channel 111 (6.5 GHz).

In this scenario, a problem can arise in that a WiFi 6E interference can strongly impact the UWB link quality, thereby:
- increasing the packet error rate (PER),
- and/or causing ranging/localization errors,
- and/or ultimately degrading the user experience.

US 2022/0078578 A1 discloses techniques for changing frequency of ranging based on location of mobile device. Disclosed is a changing of ranging intervals of a first electronic device to multiple mobile devices based on respective distances.

US 2021/0076396 A1 discloses WiFi and UWB coexistence schemes. Disclosed is a communication over a shared antenna (e.g., in a smartphone), where an operation of only device at a given time depending on a threshold is taught.

S.A. Dhanapala et al., "Modeling WiFi Traffic for White Space Prediction in Wireless Sensor Networks", in Proc. of the 42nd IEEE Conference on Local Computer Networks (LCN), 2017 proposes to model WiFi traffic based on the inter-packet arrival of WiFi traces and predict transmission opportunities for wireless sensor networks (WSN) nodes based on a Hidden Markov model (HMM).

F. Nabki (SPARK Microsystems), "MAC layer considerations for UWB data streaming". Contribution to IEEE P802.15 Working Group for Wireless Personal Area Networks (WPANs), discloses a channel check assessment (CCA) to detect sources of interference combined with a CSMA-like MAC layer to improve UWB data streaming performance.

### SUMMARY

It is an object to provide an improved data frame exchanging communication device.

According to a first aspect there is provided a method of operating a data frame exchanging communication device, comprising the steps:
- checking an on-air communication between an initiator and at least one responder, wherein either the initiator or the at least one responder is part of the data frame exchanging communication device, for interference of a data frame exchanging interferer device on said on-air communication; and
- based on determined interference, adapting a transmission scheme of the data frame exchanging communication device in order to minimize said interference.

In this way, an impact of the interferer device to the data frame exchanging communication device can be minimized, thus improving a simultaneous operation of both devices.

According to a further aspect there is provided a data frame exchanging communication device, comprising:
- an interference detector;
- a communication unit; and
- a controller adapted to check for interference between the data frame exchanging wireless communication device and a data frame exchanging interferer device and, depending on detected interference, to adapt a transmission scheme of the data frame exchanging wireless communication device for the purpose of minimizing interference.

According to a further aspect there is provided a computer implemented method comprising executable instructions which, when executed by a data frame exchanging communication device, cause said data frame exchanging communication device to carry out the proposed method.

According to an embodiment, the determination of interference is done by modelling the interference.

According to a further embodiment, the determination of interference is done by predicting the interference.

According to a further embodiment, statistics of the on-air communication is created which contains at least one of the following parameters: power level, channel frequency, average packet duration, average package arrival rate, average packet interval, which is used to model interference. In this way, a quality of the model of interference can be created qualitatively.

According to a further embodiment, a trained machine learning model is used to create a model of the interference. An alternative approach to build a model of interference is provided in this way.

According to a further embodiment, a frame exchange check between the initiator and the at least one responder is performed and, based on this check, a distance between the initiator and the at least one responder is determined.

According to a further embodiment, a transmission time scheduling is adapted such that frames of the data frame exchanging communication device do not overlap with frames of the data frame exchanging interferer device.

According to a further embodiment, a transmission offset of specified data frames of the data frame exchanging communication device are adapted for the purpose of avoiding interference. In this way collisions between the data frame exchanging communication device and the interferer device can be prevented.

According to a further embodiment, a time schedule of the initiator or a time schedule of the at least one responder or time schedules of the initiator and the at least one responder are adapted. An improved diversification of the proposed method is thus provided.

According to a further embodiment, the method is performed for a UWB device as a data frame exchanging communication device.

According to a further embodiment, the proposed method is performed for a narrow-band radio device as a data frame exchanging interferer device. In this way, also narrow-band radios (including, e.g., BLE) operating in the 6-9 GHz range, can benefit from the proposed method.

According to a further embodiment, the proposed method is performed for a WiFi/LTE/5G/6G/IMT device as a data frame exchanging interferer device.

According to further embodiments, the checking for interference, or interference detection ID, is done at least in the following circumstances: in an unused time period without UWB traffic after two-way ranging (TWR) rounds, during the message exchange by using existing UWB hardware, before every TWR round, continuously if energy is no object. In this context, checking for interference can be done in various TWR rounds, e.g., single-sided two-way ranging (SS-TWR), double-sided two-way ranging (DS-TWR), or other ranging techniques.

### BRIEF DESCRIPTION OF DRAWINGS

The aspects defined above and further aspects of the present disclosure are apparent from the examples of embodiment to be described hereinafter with reference to the appended drawings, which are explained with reference to the examples of embodiment. However, the disclosure is not limited to the examples of embodiment.

All illustrations in the drawings are schematical. It is noted, that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.
- Fig. 1: shows an example scenario of the present disclosure;
- Fig. 2: shows in principle how the proposed method works;
- Fig. 3: shows the principle of Fig. 2 in more detail;
- Fig. 4: shows an exemplary scenario of interference;
- Fig. 5: shows an effect of the proposed method having been applied to the scenario of Fig. 4;
- Fig. 6: shows a block diagram of a proposed device; and
- Fig. 7: shows a flow diagram of the proposed method.

### DESCRIPTION OF EMBODIMENTS

The present disclosure proposes to detect and model an interference source which represents a source of interference to a wireless data frame exchanging communication device and to adapt a transmission time scheduling of data frames depending on the detected interferer traffic, escaping interference and therefore reducing its negative impact on a wireless data frame exchanging communication such as UWB.

In the context of the present disclosure, the wireless data frame communication exchanging device is exemplary disclosed as an UWB device; however, the proposed method also works for other kinds of wireless data frame exchanging communication devices. In other words, while the present disclosure focuses on WiFi, the proposed method can be applicable to other wireless technologies interfering UWB currently or in the future. Furthermore, in the context of the present disclosure, the source of interference is represented by a WiFi device. WiFi in the context of the present disclosure is meant as WiFi 6E or WiFi 7, i.e., the term "WiFi" will be used to refer to both "6E" and "7".

The present disclosure proposes a mechanism to (1) detect, model, and predict WiFi sources of interference and to (2) adapt the transmission timings of UWB frames to reduce the likelihood to transmit when there is interference, reducing or removing altogether the negative impact of WiFi interference on UWB ranging, localization, sensing and data communication.

To this end, it is proposed to include a detector element within a UWB transceiver or platform to periodically monitor the shared radio channel to dynamically detect interference. Based on the information retrieved from this detector element, a logic unit can build a statistical or machine learning model that predicts a level of interference in the next active UWB transmission slots. Using the estimated predictions, the UWB transceiver can slightly change the transmission time of the following frames, with the aim to reduce a likelihood of collisions with WiFi signals and therefore escaping interference or, at least, reducing its impact.

The basic idea of the proposed method is explained based on a common ranging scheme illustrated in Fig. 2, although the proposed techniques are not restricted to this specific ranging exchange, and they can benefit any other UWB ranging scheme or communication protocols from the literature.

The ranging scheme in Fig. 2 is based on DS-TWR and is performed between two UWB devices, namely an initiator I and at least one responder R. Before these two devices I, R can start communicating and therefore performing ranging, they need to agree on used radio parameters (e.g., channel, preamble code, etc.) to use. To this end, the UWB system with the initiator I and the at least one responder R may use an out-of-band communication technology, such as a narrowband BLE (Bluetooth Low Energy) radio to exchange or agree on parameters to be used and to trigger the beginning of the ranging operation. UWB may be used for data communication; however, it may also be used for ranging and/or sensing, where no "data" may be needed to be exchanged, rather known pulse sequences.

Afterwards, the initiator I and the at least one responder R can align on a time schedule and perform ranging periodically, according to a predefined or agreed ranging interval, by exchanging the series of data frames or packets, respectively shown in Fig. 2. These data frames are generally exchanged based on a time-slotted schedule, e.g., using time slots of 1ms. Data frames are typically sent at the beginning of the time slots and may be transmitted in less than 200µs, leaving approximately 800µs for processing, scheduling, and transmission/reception preparation.

In the following, an example TWR exchange, which is used in the present disclosure is used to explain the principle concept. It is explained in more detail just for illustration purposes. According to the FiRa specification, the initiator I sends a ranging command message (RCM) with data to the at least one responder R, the data containing a request for ranging as well as ranging configuration. Subsequently three ranging messages are exchanged, i.e., without data:
- the initiator I sends a POLL message to the responder R,
- the responder R replies with a RESP message after a given time T_{reply1},
- the initiator I measures the first round-trip-time (RTT) based on the RX timestamp and T_{reply1} and sends a FINAL message after a given time T_{reply2}.

Finally, the at least one responder R measures the second RTT based on the RX timestamp and T_{reply2}. As the message FINAL contains no data, the initiator I sends a message REPORT with data containing the first RTT and T_{reply1} back to the at least one responder R, which uses all time information for the time-of-flight and distance calculation. Additionally, the at least one responder R may send back to the initiator I a measurement report informing the initiator I of the estimated distance between initiator I and at least one responder R (not shown in Fig. 2).

In an interference-rich environment, the above explained UWB message exchange can be jammed by much stronger WiFi packets, degrading the overall UWB communication link quality. This can result in various impacts, such as packet losses, increased packet errors, significant ranging estimation errors, etc.

To avoid interference and enhance the coexistence between these two conflicting radio technologies, it is therefore proposed:
- to detect or to scan for interference,
- to determine the WiFi traffic statistics or directly model the WiFi interference, and
- to adapt the UWB packet transmission times to avoid collisions (interference) with the expected WiFi signals based on the estimated traffic patterns.

Referring to Fig. 2, suppose that the devices I, R detect over time that the packet error rate PER observed in DS-TWR has increased. A UWB communication system would then switch to an interference detection mode where the environment is scanned for any source of interference. The scanning may be done:
- in an unused time period without UWB traffic after DS-TWR rounds (ID as shown in Fig. 2),
- during the message exchange by using existing UWB hardware,
- before every DS-TWR round, or
- continuously if energy is no object.

After detecting the source of interference and scanning for some time, the device can determine some traffic statistics, which may include:
- typical power level,
- typical channel frequency,
- average packet duration,
- average packet arrival rate,
- average packet interval (time separation between packets).

Based on the previous statistics and/or others, the UWB device can model the source of interference and predict a likelihood of collisions in the next DS-TWR ranging round. If collisions are expected, the UWB device can, e.g., add a small transmission offset to the originally expected transmission time of the UWB frame(s), shifting the transmission(s) to a time in which a collision or interference impact is less likely to occur, therefore increasing the possibility of the ranging exchange to succeed and provide a reasonable distance estimate. This process can be performed by the initiator I, the responder R, or both devices I, R.

Moreover, if a controller of the initiator I performs this process, it could potentially instruct the responder R of when to transmit to avoid interference. In the example above, this could for instance occur by changing the time it takes the responder R to reply to the POLL message (from T_{reply1} to T^{∗}_{reply1}), by changing the time it takes the initiator I to reply back with the FINAL (from T_{reply2} to T^{∗}_{reply2}), or in general by adapting or changing with a small time offset any packet transmission.

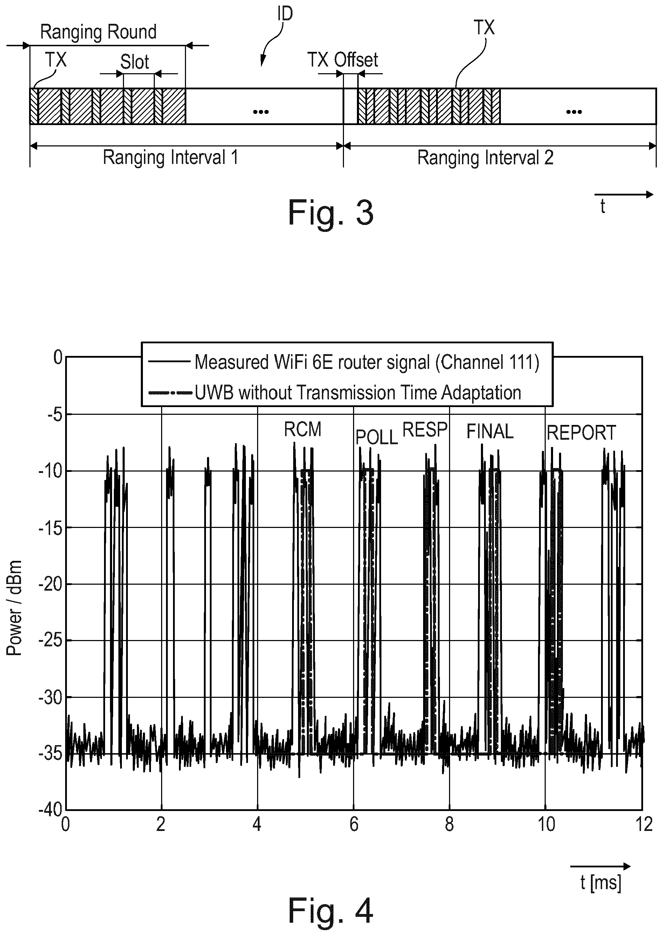

Fig. 3 illustrates the above mentioned transmission time adaptation between two ranging blocks (ranging interval 1, ranging interval 2). The initiator I and the responder R perform a DS-TWR exchange every ranging interval within a so-called "Ranging Round", which is in the present case composed of five time slots ("Slot") in ranging interval 1 to transmit/receive the packets previously shown in Fig. 2. In-between these two ranging intervals, the devices may perform interference detection ID and predict that transmissions are likely to fail if sent at the beginning of the slots in the next ranging interval. As a result, devices decide to add a small transmission (TX) time offset (TX Offset) to all the transmissions beginning in ranging interval 2. In this way the transmission time are slightly shifted, thus avoiding collisions of UWB frames with WiFi frames (not shown).

This is illustrated in more detail in Fig. 4, which shows an example based on WiFi packet traces captured during an experimental campaign. Two WiFi routers (not shown) were set up to perform data streaming at 1 Gbps over four spatial data streams (MIMO). Fig. 4 shows the measured power of channel 111 which overlaps frames of UWB channel 5. In this example, WiFi packets of channel 111 are exchanged in bursts (typically 150µs duration) with gaps of 0.5ms to 1ms between them. One recognizes that in case the UWB messages RCM, POLL, RESP, FINAL, REPORT (as also shown in Fig. 2) are exchanged without awareness of potential interference with the WiFi 6E packets of channel 111, the UWB messages RCM, POLL, RESP, FINAL, REPORT may overlap with the WiFi packets as shown in Fig. 4. As a result, this may cause in a failure of the UWB communication.

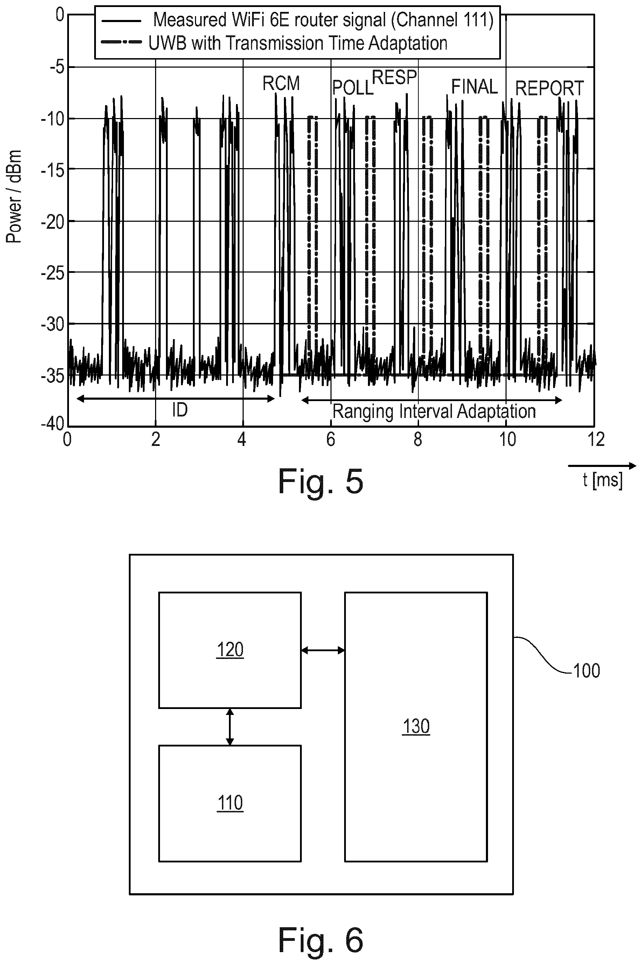

To avoid this issue, UWB devices could simply add a small time offset to the originally planned transmission time of all the UWB packets, as above explained in the context of Fig. 3. This time offset could be obtained from the detection and modelling of the WiFi interference observed before the ranging round starts. Fig. 5 shows the result of adding a time offset to all the transmissions.

Initially, a potential interference to UWB is detected (Interference Detection ID) which may occur in a dedicated scanning phase between approximately 0 ms and 5 ms or even during DS-TWR. Once an interference source has been detected and the interference traffic statistics (e.g., average packet separation) has been obtained, the UWB devices I, R can adapt the transmission time of their frames RCM, POLL, RESP, FINAL, REPORT to reduce the chances of collisions with the WiFi 6E data frames. Resulting from the ranging interval adaptation, as shown in Fig. 5, there are no collisions between data UWB frames and WiFi frames and both the UWB communication and the WiFi communication work undisturbed.

For the measurement as shown in Fig. 5, an average packet separation is estimated to be 1.3 ms. Adapting the UWB transmission time based on the WiFi statistics prevents any interference between UWB frames and WiFi 6E frames as depicted.

Fig. 6 shows an exemplary implementation of a data frame exchanging wireless communication device 100 supporting coexistence between WiFi and UWB. The data frame exchanging wireless communication device 100 comprises a UWB communication unit 110 that contains an RF circuitry and analog/digital blocks (not shown) to perform UWB message exchange with another data frame exchanging wireless communication device (not shown). One recognizes an interference detector 120, which may be included as part of the UWB communication unit 110 or as a separate block, and which detects signal interference with UWB ranging/communication and may be implemented as an energy/power detector in the time domain or a spectral estimator in the frequency domain (compute Fast Fourier Transform (FFT) and searches for power over a certain frequency band).

Furthermore, a controller 130 controls the time-accurate reception and transmission of messages (e.g., configures packet transmissions and the TX timing offsets), analyses interference traffic data from detector and determines suitable statistics, adapts the ranging interval based on the statistics, and optionally contains a machine learning module, that has been trained to map the interference statistics to a suitable predictor of when to transmit (TX offsets) to increase the likelihood of successfully transmitting a packet.

The controller 130 and the interference detector 120 are functionally coupled based on the model of interference and, based on that, initiate an adaptation of data frames as explained above.

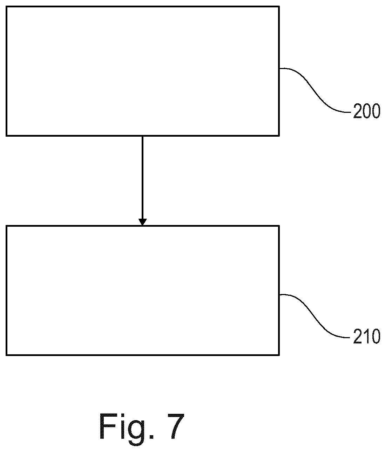

Fig. 7 shows in principle a flow of the proposed method.

In a step 200 checking an on-air communication between an initiator I and at least one responder R is done, wherein either the initiator I or the at least one responder R is part of the data frame exchanging communication device 100, for interference of a data frame exchanging interferer device 20 on said on-air communication.

In a step 210, based on determined interference, a transmission scheme of the data frame exchanging communication device 100 is adapted in order to minimize said interference.

The proposed data frame exchanging wireless communication device 100 and its elements can be implemented at least partially as a software which can be stored in a computer readable memory or at least partially as a firmware or at least partially as a hardware of the data frame exchanging wireless communication device 100.

Summarizing, Ultra-wideband (UWB) radio technology shares the 6-7 GHz frequency band with WiFi 6E and 7, which transmit at much higher power and can severely disrupt UWB operation, e.g., negatively affecting ranging, localization, and data communication. The present disclosure proposes a method to enhance UWB coexistence with WiFi 6E / 7 by detecting, modelling, and predicting WiFi 6E / 7 interference and dynamically adapting the transmission time of UWB frames to reduce the likelihood of collisions with WiFi 6E / 7 signals.

The proposed method can be applied in the context of various RF-technologies, e.g. for LTE/5G/6G/IMT devices as data frame exchanging interferer devices.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.
As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document. Moreover, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

It has to be noted that embodiments have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

### Reference numerals:

- 10: 1^{st} communication device
- 20: interference device
- 30: 2^{nd} communication device
- 40a...40d: UWB anchors
- 50: vehicle
- 100: data frame exchanging communication device
- 110: communication unit
- 120: interference detector
- 130: controller
- 200...210: method steps
- ID: interference detection

## Claims

1. Method of operating a data frame exchanging communication device (100), comprising the steps:
- checking an on-air communication between an initiator (I) and at least one responder (R), wherein either the initiator (I) or the at least one responder (R) is part of the data frame exchanging communication device (100), for interference of a data frame exchanging interferer device (20) on said on-air communication; and
- based on determined interference, adapting a transmission scheme of the data frame exchanging communication device (100) in order to minimize said interference.

2. Method according to claim 1, wherein the determination of interference is done by modelling the interference.

3. Method according to claim 2, wherein the determination of interference is done by predicting the interference.

4. Method according to claim 2 or 3, wherein statistics of the on-air communication is created which contains at least one of the following parameters: power level, channel frequency, average packet duration, average package arrival rate, average packet interval, which is used to model interference.

5. Method according to any of claims 2 to 4, wherein a trained machine learning model is used to create a model of the interference.

6. Method according to any of the preceding claims, wherein a frame exchange check between the initiator (I) and the at least one responder (R) is performed and, based on this check, a distance between the initiator and the at least one responder is determined.

7. Method according to any of claims 2 to 6, wherein a transmission time scheduling is adapted such that frames of the data frame exchanging communication device (100) do not overlap with frames of the data frame exchanging interferer device (20).

8. Method according to any of the preceding claims, wherein a transmission offset of specified data frames of the data frame exchanging communication device (100) are adapted for the purpose of avoiding interference.

9. Method according to claim 8, wherein a time schedule of the initiator (I) or a time schedule of the at least one responder (R) or time schedules of the initiator (I) and the at least one responder (R) are adapted.

10. Method according to any of the preceding claims, wherein the method is performed for a UWB device as a data frame exchanging communication device (100).

11. Method according to any of the preceding claims, wherein the method is performed for a WiFi device as a data frame exchanging interferer device (20).

12. Method according to claim 10 or 11, wherein the checking for interference is done at least in following circumstances: in an unused period after TWR rounds, during the message exchange by using existing UWB hardware, before every TWR round, or continuously if energy is no object.

13. Data frame exchanging wireless communication device (100), comprising:
- an interference detector (120);
- a communication unit (110); and
- a controller (130) adapted to check for interference between the data frame exchanging wireless communication device (100) and a data frame exchanging interferer device (20) and, depending on detected interference, to adapt a transmission scheme of the data frame exchanging wireless communication device (100) for the purpose of minimizing interference.

14. Data frame exchanging communication device (100) according to claim 13, wherein the data frame exchanging communication device (100) is a UWB device and wherein the controller is adapted to check for interference with a WiFi device as data frame exchanging interferer device (20).

15. Computer implemented method comprising executable instructions which, when executed by a data frame exchanging communication device (100), cause said data frame exchanging communication device (100) to carry out the method of any of claims 1 to 12.

## Amended claims

### Amended claims in accordance with Rule 137(2) EPC.

1. Method of operating a data frame exchanging communication device (100), comprising the steps:
- checking an on-air communication between an initiator (I) and at least one responder (R), wherein either the initiator (I) or the at least one responder (R) is part of the data frame exchanging communication device (100), for interference with a data frame exchanging interferer device (20) on said on-air communication, wherein a determination of interference (ID) is done by modelling the interference, wherein statistics of the on-air communication is created which contains at least one of the following traffic statistics: power level, channel frequency, average packet duration, average package arrival rate, average packet interval; and
- based on determined interference, adapting a transmission time scheduling of the data frame exchanging communication device (100) in order to minimize said interference with the frame exchanging interferer device (20).

2. Method according to claim 1, wherein the determination of interference is done by predicting the interference.

3. Method according to claim 1 or 2, wherein a trained machine learning model is used to create a model of the interference.

4. Method according to any of the preceding claims, wherein a frame exchange check between the initiator (I) and the at least one responder (R) is performed and, based on this check, a distance between the initiator and the at least one responder is determined.

5. Method according to any of the preceding claims, wherein the transmission time scheduling is adapted such that frames of the data frame exchanging communication device (100) do not overlap with frames of the data frame exchanging interferer device (20).

6. Method according to any of the preceding claims, wherein a transmission offset of specified data frames of the data frame exchanging communication device (100) are adapted for the purpose of avoiding interference.

7. Method according to claim 6, wherein a time schedule of the initiator (I) or a time schedule of the at least one responder (R) or time schedules of the initiator (I) and the at least one responder (R) are adapted.

8. Method according to any of the preceding claims, wherein the method is performed for a UWB device as a data frame exchanging communication device (100).

9. Method according to any of the preceding claims, wherein the method is performed for a WiFi device as a data frame exchanging interferer device (20).

10. Method according to claim 8 or 9, wherein the checking for interference is done at least in following circumstances: in an unused period after TWR rounds, during the message exchange by using existing UWB hardware, before every TWR round, or continuously if energy is no object.

11. Data frame exchanging wireless communication device (100), comprising:
- an interference detector (120);
- a communication unit (110); and
- a controller (130) adapted to check for interference between the data frame exchanging wireless communication device (100) and a data frame exchanging interferer device (20), wherein a determination of interference (ID) is done by modelling the interference, wherein statistics of the on-air communication is created which contains at least one of the following traffic statistics: power level, channel frequency, average packet duration, average package arrival rate, average packet interval and, depending on detected interference, to adapt a transmission time scheduling of the data frame exchanging wireless communication device (100) for the purpose of minimizing interference with the data frame exchanging interferer device (20).

12. Data frame exchanging communication device (100) according to claim 11, wherein the data frame exchanging communication device (100) is a UWB device and wherein the controller is adapted to check for interference with a WiFi device as data frame exchanging interferer device (20).

13. Computer implemented method comprising executable instructions which, when executed by a data frame exchanging communication device (100), cause said data frame exchanging communication device (100) to carry out the method of any of claims 1 to 10.
